# EUROPÄISCHE PATENTANMELDUNG

(11) **EP 1 367 385 A1**
(43) Veröffentlichungstag der Anmeldung: **03.12.2003**
(21) Anmeldenummer: 02012038.2
(22) Anmeldetag: 31.05.2002
(51) Int. Cl.: G01N 21/89, D06H 3/08

(54) **Doppelbelichtung**

(71) Anmelder: Hergeth, Hubert A., 4731 Eynatten (BE)
(72) Erfinder: Hergeth, Hubert A., 4731 Eynatten (BE)

(57) **Zusammenfassung**

Verfahren zum Erzeugen von Durchlicht- und Auflichtkontrollen von Materialbahnen mittels Sensorleisten

Das Durchlicht und Auflicht wird mit dem Auslesen des Sensors koordiniert.

## Beschreibung

Die Erfindung betrifft ein Verfahren zum optischen Kontrollieren und Bewerten von Materialbahnen wie sie z. B. in der Textil- oder Druckindustrie vorkommen. Es ist bekannt, diese Materialbahnen mittels Zeilenkameras sowohl im Durch- als auch im Auflicht zu inspizieren. In einigen Fällen ist es jedoch wünschenswert, sowohl im Durchlicht z. B. für die Materialverteilung als auch im Auflicht für die Oberflächeninspektion das Material zu begutachten. Aufgabe der Erfindung ist es, diese doppelte Begutachtung einfach durchzuführen. Erfindungsgemäß wird dies bewirkt, indem ein Bahnsensor, wie in der EP 01123929.0 beschrieben, genutzt wird, eine Beleuchtungsleiste auf der anderen Seite angebracht wird, und beide Beleuchtungen abgestimmt aufeinander Licht aussenden, das von den gleichen Sensoren empfangen wird. In einer praktischen Ausführung sind sowohl der Bahnsensor als auch die Beleuchtungsleiste mit mindestens einer LED Zeile bestückt, die sich über die zu inspizierende Bahnbreite erstreckt. Die Durchlicht- und Auflichtbeleuchtungszeilen werden abwechselnd mit Strom beaufschlagt. Der Beaufschlagungstakt entspricht genau dem Takt, in dem die Werte der lichtempfindlichen Elemente aus dem Zeilensensor herausgegeben werden. Es wird somit eine Zeile mit Durchlicht- und die nächste Zeile mit Auflichtwerten ausgelesen.

Der Computer speichert die Werte für Durchlicht- und Auflichtzeilen separat ab und wertet sie separat aus. Auf diese Weise können fast zeitgleich und mit wenig Aufwand Durchlicht- und Auflichtkontrollen durchgeführt werden. Es ist auch denkbar, eine Wechsellichtquelle zur Durchlichtbeleuchtung zu benutzen und in einer Dunkelphase ein Auflicht leuchten zu lassen. Die Zeilenauslesung würde dann von der Beleuchtung ausgelöst werden. Da der Vorgang des Beleuchtens und des Zeilenauslesens in sehr schneller Abfolge geschieht, entsteht das Abbild des Auflicht- und Durchlichtbildes praktisch gleichzeitig.

### Beschreibung der Skizze

Die Faserbahn (1) wird über ein Gehäuseprofil (2) gezogen, das durch eine Glasscheibe (3) abgedeckt ist. In dem Gehäuse befindet sich eine Reihe von Licht empfindlichen Sensoren (5), die durch eine Linse (4) die Bahnsignale empfangen. Die Auflichtbeleuchtung erfolgt durch mindestens eine Reihe LED's (7), die durch eine Linse (6) die Faserbahn beleuchtet. Gegenüber befindet sich in einem weiteren Gehäuse (1), das mit einer Scheibe (3) abgeschlossen ist, die Durchlichtbeleuchtung mittels LED's (7) und einer Linse (6).

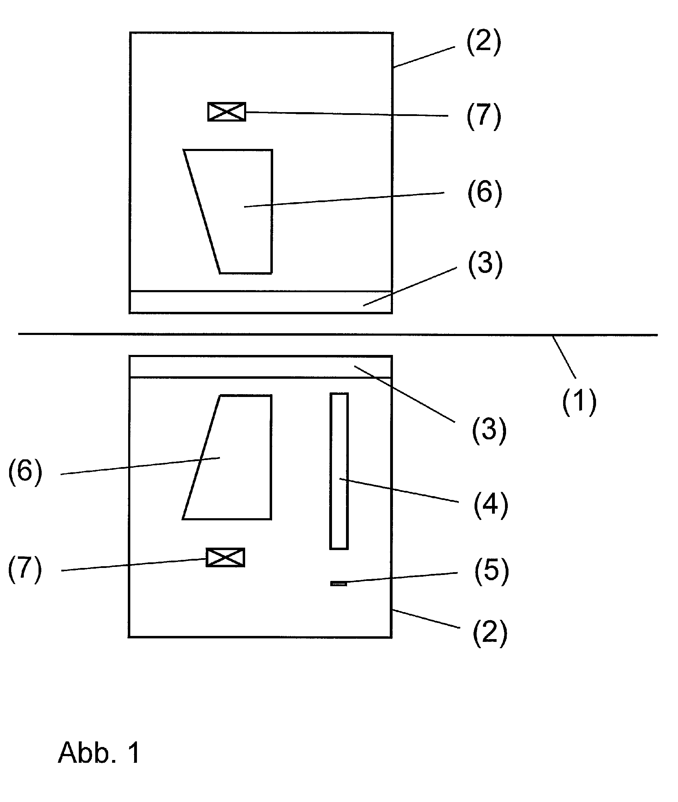

## Patentansprüche

1. Verfahren zum Erzeugen von Durchlicht- und Auflichtkontrollen an bewegten Materialbahnen, bei denen eine Sensorzeile verwendet wird, die sich einzeln oder gestaffelt unterteilt über die Bahnbreite erstreckt, **dadurch gekennzeichnet, daß** die Auflicht- und Gegenlichtquellen dunkle Phasen aufweisen, in denen die jeweils andere leuchtet, und diese Hell- und Dunkelphasen mit dem Auslesen der Sensorzeile koordiniert sind.

2. Verfahren nach Anspruch 1) **dadurch gekennzeichnet, daß** das Auflicht und Durchlicht abwechselnd leuchten.

3. Verfahren nach Anspruch 1) und 2) **dadurch gekennzeichnet, daß** das Auflicht und Durchlicht in einem vorherbestimmten Zeittakt leuchten.

4. Verfahren nach einem der Ansprüche 1) bis 3) **dadurch gekennzeichnet, daß** als Leuchten eine Vielzahl von LED's eingesetzt werden.

5. Verfahren nach einem der Ansprüche 1) bis 4) **dadurch gekennzeichnet, daß** ein Computer das Leuchten der Durch- und Auflichtbeleuchtung und das Auslösen der Sensorzeile koordiniert.

6. Verfahren nach einem der Ansprüche 1) bis 5) **dadurch gekennzeichnet, daß** das Auslesen der Sensorzeile durch das Aufleuchten der Beleuchtung ausgelöst wird.

7. Verfahren nach einem der Ansprüche 1) bis 6) **dadurch gekennzeichnet, daß** ausgelesene Zeilen gespeichert werden und danach bestimmten Beleuchtungszuständen zugeordnet werden.
